(19) Europäisches Patentamt
European Patent Office
Office européen des brevets

(11) Veröffentlichungsnummer: **0 263 063**
**A1**

(12) # EUROPÄISCHE PATENTANMELDUNG

(21) Anmeldenummer: **87810511.3**

(22) Anmeldetag: **04.09.87**

(51) Int. Cl.[4]: **C 09 B 67/24**
// D06L3/12, C09B67/22

(30) Priorität: **10.09.86 CH 3638/86**

(43) Veröffentlichungstag der Anmeldung:
**06.04.88 Patentblatt 88/14**

(84) Benannte Vertragsstaaten: **CH DE FR GB LI**

(71) Anmelder: **CIBA-GEIGY AG**
**Klybeckstrasse 141**
**CH-4002 Basel (CH)**

(72) Erfinder: **Balliello, Paolo, Dr.**
**Urichstrasse 15**
**D-7888 Rheinfelden 8 (DE)**

**Schilling, Otto**
**Luzernerring 70**
**CH-4056 Basel (CH)**

**Bruttel, Beat, Dr.**
**Ob den Reben 5**
**CH-4461 Böckten (CH)**

(54) **Feste Formulierung von anionischen Wollfarbstoffen.**

(57) Beschrieben werden feste Farbstoff-Formulierungen die mindestens einen anionischen Wollfarbstoff und gegebenenfalls weitere Zusätze sowie eine Mischung eines anionischen Dispergiermittels und eines amphoteren Tensides enthalten; derartige Formulierungen sind vor allem durch verbesserte Löseeigenschaften in Wasser gekennzeichnet.

EP 0 263 063 A1

**Beschreibung**

Feste Formulierung von anionischen Wollfarbstoffen

Die Erfindung betrifft eine feste Formulierung von anionischen Wollfarbstoffen, Verfahren zu deren Herstellung und deren Verwendung zum Färben und Bedrucken von Textilmaterialien, insbesondere von Wolle und Polyamid.

Es wurde gefunden, dass sich u.a. die Wasserlöslichkeit von festen Formulierungen anionischer Wollfarbstoffe überraschenderweise durch den Zusatz einer Mischung von amphoteren Tensiden und anionischen Dispergiermitteln steigern lässt.

Gegenstand der vorliegenden Erfindung ist somit eine feste Formulierung von anionischen Wollfarbstoffen enthaltend mindestens einen anionischen Wollfarbstoff, ein anionisches Dispergiermittel und gegebenenfalls weitere Zusätze welche dadurch gekennzeichnet ist, dass sie mindestens ein amphoteres Tensid enthält.

Dabei soll das Kriterium der Wasserlöslichkeit im folgenden als erfüllt angesehen werden, wenn sich 5 g feste Formulierung unter normierter mechanischer Einwirkung in 50 ml Wasser, temperiert auf 25 bis 30°C innerhalb von 5 Minuten rückstandsfrei lösen lassen (MKDL-Test).

Die anionischen Wollfarbstoffe können den verschiedensten Farbstoffklassen angehören und gegebenenfalls eine oder mehrere Sulfonsäuregruppen und gegebenenfalls eine oder mehrere faserreaktive Gruppen enthalten. Insbesondere handelt es sich um Triphenylmethanfarbstoffe mit mindestens zwei Sulfonsäuregruppen, schwermetallfreie Monoazo-und Disazofarbstoffe mit je einer oder mehreren Sulfonsäuregruppen und gegebenenfalls einer oder mehreren faserreaktiven Gruppen und schwermetallhaltige, namentlich kupfer-, chrom-, nickel- oder kobalthaltige Monoazo-, Disazo-, Azomethin- und Formazanfarbstoffe, insbesondere metallisierte Farbstoffe, die an ein Metallatom zwei Moleküle Azofarbstoff oder ein Molekül Azofarbstoff und ein Molekül Azomethinfarbstoff gebunden enthalten, vor allem solche, die als Liganden Mono- und/oder Disazofarbstoffe und/oder Azomethinfarbstoffe und als zentrales Metallion ein Chrom- oder Kobaltion enthalten, wie auch Anthrachinonfarbstoffe, insbesondere 1-Amino-4-arylaminoanthrachinon-2-sulfonsäuren bzw. 1,4-Diarylamino- oder 1-Cycloalkylamino-4-arylaminoanthrachinonsulfonsäuren. Unter faserreaktiven Gruppen sind solche Gruppen zu verstehen, die mit dem zu färbenden natürlichen Polyamidmaterial eine kovalente Bindung eingehen.

Es können gegebenenfalls auch Mischungen anionischer Wollfarbstoffe verwendet werden bzw. eine Mischung von Farbstoffen anionischer, sauer und metalkomplexer Natur. Bevorzugt ist eine Mischung definitionsgemässer anionischer Wollfarbstoffe, welche

a) mindestens zwei Farbstoffe enthält; oder

b) mindestens drei Farbstoffe enthält; oder

c) zum Trichromie- oder Polychromie-Färben mindestens drei Farbstoffe aus gelb-, bzw. orange-, rot- und blaufärbenden Farbstoffen enthält.

Als anionische Wollfarbstoffe kommen im einzelnen insbesondere solche in Betracht wie sie in der EP-A-0089004 beschrieben sind.

Die Menge der anionischen Wollfarbstoffe in der festen Formulierung schwankt von 20 bis 80 Gew.-%, bezogen auf das Gesamtpräparat.

Ferner sollen unter dem Begriff anionische Wollfarbstoffe im vorliegenden auch anionische optische Aufheller verstanden werden.

Bei den anionischen Dispergiermitteln handelt es sich um die üblichen Dispergiermittel für wasserlösliche Farbstoffe, z.B. um Kondensationsprodukte von aromatischen Sulfonsäuren mit Formaldehyd. Besonders geeignet sind jedoch Ligninsulfonate, z.B. die unter der Bezeichnung Sulfitablauge erhältlichen Verbindungen. Es können auch Gemische dieser Dispergiermittel verwendet werden. Allgemein enthalten die erfindungsgemässen Granulate 1 bis 20 vorteilhaft 3 bis 10 Gew.% an anionischem Dispergiermittel.

Daneben können die festen Formulierungen noch weitere in Handelsformulierungen übliche Zusätze, wie Coupagemittel, z.B. Dextrin, Harnstoff, Rohrzucker oder anorganische Salze, wie Natriumchlorid oder Natriumsulfat, sowie oberflächenaktive Substanzen, wie äthoxylierte oder sulfonierte bzw. sulfatierte organische Verbindungen, d.h. nichtionische oder anionische Tenside, wie z.B. Nonylphenolpentadecaglykoläther, Nonylphenoldiglykoläthersulfat oder Dodecylbenzolsulfonat sowie schaumhemmende Netzmittel enthalten.

Unter amphoteren Tensiden sind solche Verbindungen zu verstehen, die in wässriger Lösung, je nach pH-Wert, anionischen oder kationischen Charakter aufweisen und in der Nähe des isoelektrischen Punktes innere Salze bilden. Nach Moore werden die amphoteren Tenside (auch Amphotenside genannt) in Ampholyte und Betaine eingeteilt [siehe J. Soc. Cosmetic Chemists 11, 13 (1960)].

Es hat sich gezeigt, dass zur Verbesserung der Wasserlöslichkeit von anionischen Wollfarbstoffen die amphoteren Tenside vom Betaintyp geeignet sind, vor allem solche der Formel I

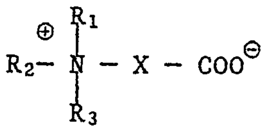

(I),

worin die Reste $R_1$ bis $R_3$ und das Brückenglied X die folgende Bedeutung haben:
$R_1$ und $R_3$ unabhängig voneinander einen $C_1$-$C_4$-Alkylrest,
$R_2$ einen gegebenenfalls durch Hydroxy, Acetylamino, Niederalkoxy (z.B. Methoxy oder Aethoxy) oder Halogen substituierten $C_1$-$C_{20}$-Alkylrest,
X ein gegebenenfalls durch Alkyl $C_5$-$C_{20}$ substituierter Alkylenrest mit 1 bis 3 Kohlenstoffatomen.

Ein besonders wirksames Amphotensid ist das Betain selbst ($R_1$, $R_2$ und $R_3$ = Methyl, X = Methylen), das als Anhydrid (absolut trocken), Hydrochlorid oder auch Monohydrat, gegebenenfalls als Kalium- oder Natriumsalz, eingesetzt wird.

Neben Betainen der Formel I kommen jedoch beispielsweise auch solche in Frage, die anstelle der Carboxylgruppe eine Sulfo- (Sulfobetaine) oder Sulfatogruppe (Sulfatbetaine) aufweisen.

Besonders gute Ergebnisse werden auch mit anderen Aminosäuren, wie Glycin, Alanin, Leucin und Aethylendiamintetraessigsäure erzielt.

Die festen Formulierungen können auch ein Gemisch von zwei oder mehreren amphoteren Tensiden enthalten.

Die Menge an amphoterem Tensid schwankt zwischen 1 und 20, vorzugsweise zwischen 3 und 10 und insbesondre zwischen 3 und 8 Gew.% bezogen auf die feste Formulierung. In den bevorzugten festen Formulierungen ist zudem die Menge des amphoteren Tensides gleich gross oder kleiner als die Menge an anionischem Dispergiermittel.

Hergestellt werden die festen Formulierungen, indem man einen oder mehrere anionische Wollfarbstoffe bzw. optischen Aufheller unter Zusatz eines anionischen Dispergiermittels, gegebenenfalls weiterer Zusätze und mindestens eines amphoteren Tensides entweder trocken vermischt oder in Wasser anschlämmt, gegebenenfalls einem Mahlprozess unterwirft und die so erhaltene Anschlämmung, welche meistens eine Lösung oder ein heterogenes System ist, trocknet. Die Trocknung erfolgt nach keder bekannten Art und Weise, beispielsweise im Schaufeltrockner, Vakuumtrockner, im Wirbelschichttrockner und mittels Sprühtrocknung oder Zerstäuben, wobei das wässrige System über eine zur Erzeugung von Tropfen gewünschter Grösse geeignete Vorrichtung (z.B. Düse, Zertropfer, Schwinger oder rotierende Scheibe) in den Trockner eingegeben wird. Die Gaseingangstemperatur des Trockners liegt bei 130° bis 250°C, die Gasausgangstemperatur bei 80° bis 150°C. Die Trocknung wird so gestaltet, dass die Produkttemperatur nicht über einen spezifischen kritischen Grenzwert steigt, oberhalb dessen die feste Formulierung irreversible Veränderungen erleidet.

Vor dem Trocknen kann der Slurry einem Mahlprozess unterworfen werden, beispielsweise in einer Rührwerks-Kugelmühle oder Sandmühle. Falls vermahlen wird, kann man einen Teil der Komponenten auch erst nach dem Mahlvorgang zusetzen.

Der anionische Wollfarbstoff bzw. anionische optische Aufheller kann z.B. als trockene Rohware oder als Presskuchen oder auch aus dem letzten Syntheseschritt direkt als Suspension oder Lösung eingesetzt werden.

Die erfindungsgemässen festen Formulierungen zeichnen sich u.a. durch folgende vorteilhafte Eigenschaften aus:
- sehr gute Löseeigenschaften und Löslichkeit in Wasser und dadurch vorteilhafte Applikationseigenschaften;
- homogene Korngrössenverteilung;
- rieselfähig;
- staubfrei;
- schaumfrei in der Anwendung.

Verwendung finden die erfindungsgemässen festen Formulierungen zur Herstellung von Färbebädern, Klotzflotten oder Druckpasten. Diese eignen sich zum Färben oder Bedrucken vor allem von Textilmaterial vorzugsweise solchem aus Wolle und Polyamid.

Die folgenden Beispiele dienen der Erläuterung der Erfindung. Teile (T) bedeuten Gewichtsteile und Prozente (%) Gewichtsprozente.

Beispiel 1

Die Formulierung der Zusammensetzung:

53,0 % des Farbstoffes der Formel A)

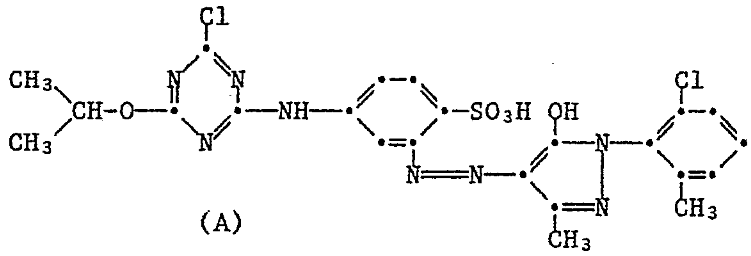

(A)

8.3 % des Farbstoffes der Formel B)

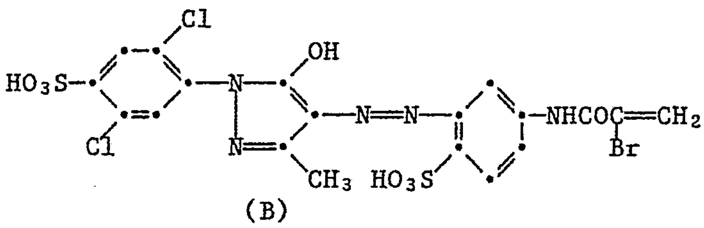

(B)

16,7 % eines Kondensationsproduktes von Naphthalinsulfosäure und Formaldehyd (C)

8,0 % des amphoteren Tensides Glycin D)

6,0 % eines anionaktiven Dispergiermittels E) erhalten durch Umsetzung von o-Phenylendiamin mit Stearinsäure zu 2-Heptadecylbenzimidazol, anschliessende Alkylierung mit Benzylchlorid und Sulfonierung mit Oleum/Monohydrat,

0,1 % eines schaumhemmenden Netzmittels F) und

7,9 % Restfeuchte

---

100,0 %

wurde wie folgt erhalten:
In eine Mühle werden unter Rühren der Reihe nach eingetragen:
400,0 T Wasser
40,0 T aninonisches Dispergiermittel C)
28,4 T amphoteres Tensid D)
0,35 T schaumhemmendes Netzmittel F)
188,0 T des Farbstoffes A)
29,4 T des Farbstoffes B)
wobei zunächst ein Slurry erhalten wird, der nach ca. 1 Stunde Rühren in eine Lösung übergeht. Unter weiterem Rühren werden
21,3 T des Dispergiermittels E) und
19,2 T des Dispergiermittels C) zugegeben.

Die so erhaltene Lösung wird sodann in einem Düsentrockner (Lufteingangstemperatur 185°C, Luftausgangstemperatur 80-85°C) sprühgetrocknet. Man erhält eine feste Formulierung, deren Löseverhalten und Löslichkeit in Wasser deutlich verbessert ist.

Beispiel 2

Die Formulierung der Zusammensetzung:

21,4 % des Farbstoffes der Formel C)

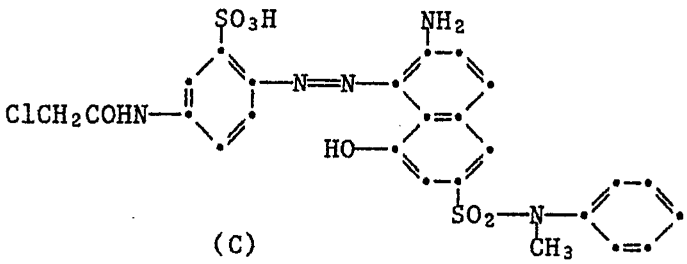

(C)

22,4 % des Farbstoffes der Formel D)

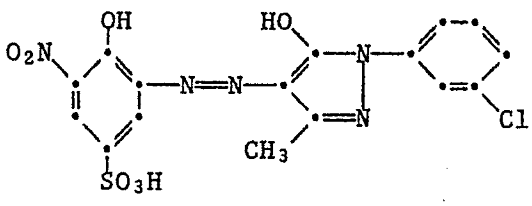

+

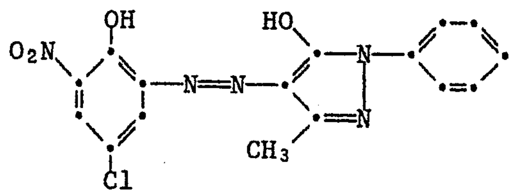

1:1 Cr-Komplex (D)

34,6 % eines Kondensationsproduktes von Naphthalinsulfosäure und Formaldehyd C)

8,0 % des amphoteren Tensides Glycin D)

6,0 % eines anionaktiven Dispergiermittels E) erhalten durch Umsetzung von o-Phenylendiamin mit Stearinsäure zu 2-Heptadecylbenzimidazol, anschliessende Alkylierung mit Benzylchlorid und Sulfonierung mit Oleum/Monohydrat

0,1 % eines schaumhemmenden Netzmittels F) und

7,9 % Rest

100,0 %

wurde wie folgt erhalten:

In einer Mühle werden unter Rühren der Reihe nach eingetragen:

444,3 T Wasser

90,0 T anionisches Dispergiermittel C)

32,0 T amphoteres Tensid D)

0,4 T schaumhemmendes Netzmittel F)

85,7 T des Farbstoffes A)

88,1 T des Farbstoffes B)

Es wird ein Slurry erhalten, der unter Verwendung von Glasperlen 4 Std. in der Mikrosolmühle gemahlen wird. Nach der Mahlung werden dem Mahlgut

48,2 T des Dispergiermittels E)

24,0 T des Dispergiermittels C

240,0 T Wasser zugegeben.

Die so erhaltene Eindampfsuspension wird sodann in einem Düsentrockner (Lufteingangstemperatur 185°C, Luftausgangstemperatur 80-85°C) sprühgetrocknet. Man erhält eine feste Formulierung, deren

Löseverhalten und Löslichkeit in Wasser deutlich verbessert ist.

## Patentansprüche

1. Feste Formulierung enthaltend mindestens einen anionischen Wollfarbstoff, ein anionisches Dispergiermittel und gegebenenfalls weitere Zusätze, dadurch gekennzeichnet, dass diese feste Formulierung mindestens ein amphoteres Tensid enthält.

2. Feste Formulierung gemäss Anspruch 1, dadurch gekennzeichnet, dass diese als amphoteres Tensid eine Verbindung vom Betaintyp enthält.

3. Feste Formulierung gemäss Anspruch 2, dadurch gekennzeichnet, dass diese als amphoteres Tensid ein Betain der Formel I

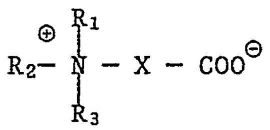

(I),

enthält, worin
$R_1$ und $R_3$ unabhängig voneinander einen $C_1$-$C_4$-Alkylrest und
$R_2$ einen gegebenenfalls durch Hydroxy, Acetylamino, Niederalkoxy oder Halogen substituierten $C_1$-$C_{20}$-Alkylrest bedeutet und
X ein gegebenenfalls durch Alkyl $C_5$-$C_{20}$ substituierter Alkylenrest mit 1 bis 3 Kohlenstoffatomen darstellt.

4. Feste Formulierung gemäss Anspruch 3, dadurch gekennzeichnet, dass diese als Betain der Formel I ein solches enthält, worin $R_1$, $R_2$ und $R_3$ Methyl und X Methylen bedeutet.

5. Feste Formulierung gemäss Anspruch 1, dadurch gekennzeichnet, dass diese als amphoteres Tensid Glycin enthält.

6. Feste Formulierung gemäss Anspruch 1, dadurch gekennzeichnet, dass die Menge des amphoteren Tensides gleich gross oder kleiner ist als die Menge an anionischem Dispergiermittel.

7. Verfahren zur Herstellung der festen Formulierung gemäss Anspruch 1, dadurch gekennzeichnet, dass man mindestens einen anionischen Wollfarbstoff bzw. eine Mischung von Farbstoffen anionischer, sauer und metallkomplexer Natur zusammen mit einem anionischen Dispergiermittel und mindestens einem amphoteren Tensid und gegebenenfalls weiteren Zusätzen trocken vermischt.

8. Verfahren zur Herstellung der festen Formulierung gemäss Anspruch 1, dadurch gekennzeichnet, dass man mindestens einen anionischen Wollfarbstoff bzw. eine Mischung von Farbstoffen anionischer, sauer und metallkomplexer Natur zusammen mit einem anionischen Dispergiermittel und mindestens einem amphoteren Tensid und gegebenenfalls weiteren Zusätzen in Wasser anschlämmt oder suspendiert und die Suspension mittels einer Trocknung in eine feste Formulierung überführt.

9. Verfahren gemäss Anspruch 8, dadurch gekennzeichnet, dass man die Suspension mittels Zerstäubungstrocknung in eine feste Formulierung überführt.

10. Verfahren gemäss Anspruch 8, dadurch gekennzeichnet, dass man die Suspension vor der Trocknung einem Mahlprozess unterwirft.

11. Verwendung der festen Formulierung gemäss Anspruch 1 zur Herstellung von Färbebädern, Klotzflotten und Druckpasten zum Färben und Bedrucken von Textilmaterial.

12. Verwendung gemäss Anspruch 10 zum Färben und Bedrucken von Wolle- und Polyamidmaterialien.

Europäisches Patentamt

# EUROPÄISCHER RECHERCHENBERICHT

Nummer der Anmeldung

EP 87 81 0511

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 057 158 (CIBA-GEIGY)<br>* Seite 1, Zeile 4 - Seite 2, Zeile 18; Seite 4, Zeile 3 - Seite 9, Zeile 14; Beispiele *<br>--- | 1-11 | C 09 B 67/24 //<br>D 06 L 3/12<br>C 09 B 67/22 |
| X | EP-A-0 097 121 (CIBA-GEIGY)<br>* Zusammenfassung *<br>--- | 1,6,7,10,11 | |
| D,A | EP-A-0 089 004 (CIBA-GEIGY)<br>* Zusammenfassung; Beispiel 16 *<br>--- | 1,11 | |
| A | EP-A-0 124 866 (CIBA-GEIGY)<br>* Seite 1, Zeilen 4-17; Seite 3, Zeile 8 - Seite 4, Zeile 24 *<br>--- | 1-4,6-10 | |
| A | FR-A-2 524 476 (CIBA-GEIGY)<br>----- | | |
| | | | **RECHERCHIERTE SACHGEBIETE (Int. Cl.4)** |
| | | | C 09 B<br>D 06 L<br>D 06 P |

Der vorliegende Recherchenbericht wurde für alle Patentansprüche erstellt

| Recherchenort | Abschlußdatum der Recherche | Prüfer |
|---|---|---|
| DEN HAAG | 17-12-1987 | DAUKSCH H.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)